(19) Europäisches Patentamt
European Patent Office
Office européen des brevets

(11) **EP 2 155 534 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **08735478.3**

(22) Anmeldetag: **26.03.2008**

(51) Int Cl.:
*B60W 30/12* (2006.01)  *B62D 15/02* (2006.01)
*B60W 40/10* (2012.01)

(86) Internationale Anmeldenummer:
**PCT/EP2008/053532**

(87) Internationale Veröffentlichungsnummer:
**WO 2008/138673 (20.11.2008 Gazette 2008/47)**

(54) **FAHRERASSISTENZVORRICHTUNG UND VERFAHREN FÜR DESSEN STEUERUNG**

DRIVER ASSISTANCE DEVICE AND METHOD FOR THE CONTROL THEREOF

DISPOSITIF D'ASSISTANCE AU CONDUCTEUR ET SON PROCÉDÉ DE COMMANDE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.05.2007 DE 102007022184**

(43) Veröffentlichungstag der Anmeldung:
**24.02.2010 Patentblatt 2010/08**

(73) Patentinhaber: **Robert Bosch GmbH**
**70442 Stuttgart (DE)**

(72) Erfinder:
• **BUERKLE, Lutz**
**71229 Leonberg (DE)**
• **RENTSCHLER, Tobias**
**75180 Pforzheim (DE)**
• **APP, Thomas**
**75059 Zaisenhausen (DE)**

(56) Entgegenhaltungen:
EP-A- 1 531 113      EP-A- 1 621 449
EP-A1- 1 977 946     EP-A2- 1 783 719
WO-A1-2007/051671    DE-A1-102007 007 442

**Beschreibung**

Stand der Technik

Die Erfindung betrifft eine Fahrerassistenzvorrichtung nach dem Oberbegriff des Anspruchs 1, sowie ein Verfahren für die Steuerung eines Fahrerassistenzsystems nach dem Oberbegriff des Anspruchs 15. Es sind Fahrerassistenzsysteme bekannt, die den Fahrer bei dem Einhalten einer gewählten Fahrspur unterstützen. Das Fahrerassistenzsystem umfasst dazu Assistenzfunktionen wie LDW (Lane Departure Warning) und/oder LKS (Lane Keeping Support). Die Assistenzfunktion LDW warnt den Fahrer vor einem Verlassen der Fahrspur durch Erzeugung von optischen und/oder akustischen und/oder haptischen Signalen. Die Assistenzfunktion LKS greift aktiv in Bordsysteme des Fahrzeugs, wie beispielsweise das Lenksystem, und/oder das Bremssystem oder ein ESP-System ein, um ein von der Fahrspur abweichendes Fahrzeug in der Fahrspur zu halten. Das Fahrerassistenzsystem umfasst dazu ein insbesondere mindestens einen Videosensor umfassendes Sensorsystem für die Erfassung von Fahrspurmarkierungen oder dergleichen.

Aus DE 101 37 292 A1 ist ein Verfahren zum Betreiben eines Fahrer-Assistenzsystems eines Fahrzeugs, insbesondere Kraftfahrzeugs, mit einer servounterstützten Lenkung bekannt. Dieses Verfahren ist durch folgende Schritte gekennzeichnet:

- Erfassen oder Abschätzen von Umgebungsdaten einer, vorzugsweise momentanen, Verkehrssituation,

- Erfassen oder Abschätzen von, vorzugsweise momentanen, Bewegungsdaten des Fahrzeugs,

- Vergleichen der erfassten oder abgeschätzten Umgebungsdaten mit den Bewegungsdaten des Fahrzeugs,

- Änderung der Unterstützung einer Lenkhandhabe nach Maßgabe des Vergleichs.

Durch Einschränkungen, z.B. in dem Erfassungsbereich von in dem Fahrerassistenzsystem verwendeten Sensoren oder in der Gültigkeit von bei der Auslegung des Fahrerassistenzsystems getroffenen Modellannahmen, werden Systemgrenzen definiert, bei deren Überschreiten der Fahrer die Führung des Fahrzeugs wieder vollständig selbst übernehmen muss. Bei Erreichen einer vorgegebenen Systemgrenze, beispielsweise durch Verlust der Fahrspur bzw. deren Markierung, Überschreiten eines Maximalwerts der Querbeschleunigung, oder Ähnliches, deaktiviert sich die bis dahin von dem Fahrerassistenzsystem bereitgestellte Assistenzfunktion. Bei einem Fahrerassistenzsystem mit LKS-Funktion wird dann beispielsweise das von dem Fahrerassistenzsystem an dem Lenkrad aufgebrachte Führungsmoment reduziert. Der Fahrer muss dann die Querführung des Fahrzeugs wieder vollständig selbst übernehmen. Da die erwähnten Systemgrenzen eines Fahrerassistenzsystems ausschließlich technisch motiviert sind, sind sie für einen Fahrer oft nicht verständlich oder nicht nachvollziehbar, da sie sich nicht mit seiner eigenen Wahrnehmung decken. Dies führt zu einer Verunsicherung des Fahrers und zu einer mangelnden Akzeptanz des Fahrerassistenzsystems.

Die EP 15 31 113 A2 zeigt ein gattungsgemäßes Lane-Departure-Warning-System, welches Warnungen vor einem möglichen Spunrerlassen in Abhängigkeit von weiteren Parametern durchführt bzw. unterdrückt bzw. mittel stärkerer oder schwächerer Warnungen durchführt. Hierbei sind Parameter, wie die verbleibende Zeit bis zum Eintritt in die Gefahrensituation oder die Art der Spurmarkierung oder der Zustand des Fahrers zu berücksichtigen.

Die EP 16 21449 A2 zeigt ein Lane-Keeping-System dass das durch das System ausgeübte Lenkmoment in Abhängigkeit von der aktuellen Fahrspurbreite einstellt. Dadurch wird bei Abweichung des Fahrzeugs von einer Mittel-, oder sonstigen Trajektorie der Lenkeingriff des Systems trotz gleicher Abweichung stärker oder schwächer gestaltet, je nach dem wie breit die Fahrspur ist.

Die DE 10 2007 007442 A1 lehrt ebenfalls ein System, dass eine Krafteinwirkung auf ein Lenkrad ausübt, derart dass abhängig von dem Lenkwinkel ein unterschiedliches Lenkmoment aufgebracht wird. Dieses aufgebrachte Zusatzmoment wird in Abhängigkeit von einem ermittelten Fahrbahnrandwert variiert.

Die EP 178 37 19 A2 lehrt die Konfiguration von Warnschwellen vor dem Verlassen der Fahrspur, wobei die Schwellen derart bestimmt werden, in dem der Fahrer bei einer Kalibrationsfahrt an einem Punkt an dem gewarnt werden möchte bei einem Abdriften aus der Fahrspur eine Taste betätigt und somit die Konfiguration durchführt. Für verschiedene Fahrer kann dieses jeweils individuell geschehen.

Die EP 19 77 946 A1 beschreibt eine Steuerung für ein Spurhaltesystem welches die Solltrajektorie abhängig von im Voraus befindlichen Hindernissen (z.B. dem Überholen eines anderen Fahrzeugs) anpasst, um eine mögliche Kollisionsgefahr zu minimieren.

Die WO 2007/051671 A1 lehrt auch ein LKS-System, bei welchem die Lenkkräfte auf Basis bestimmter Einflussgrößen adaptiert werden, hier vor allem abhängig davon ob das Fahrzeug in Richtung Kurveninnenseite abweicht, um dann geringere Lenkkorrekturkräfte auszuüben, als bei einer Abweichung Richtung Außenseite der Kurve.

Offenbarung der Erfindung

Technische Aufgabe

Der Erfindung liegt die Aufgabe zugrunde, ein Fahrerassistenzsystem der gattungsgemäßen Art dahingehend zu verbessern, dass die Systemakzeptanz bei dem Fahrer erhöht und dadurch der von dem Fahrer subjektiv empfundene Fahrkomfort verbessert wird.

Technische Lösung

Diese Aufgabe wird, ausgehend von einem Fahrerassistenzsystem nach dem Oberbegriff des Anspruchs 1, durch die in dem kennzeichnenden Teil des Anspruchs 1 genannten Merkmale gelöst.

Vorteilhafte Wirkungen

Die Erfindung ermöglicht eine weitere Verbesserung des Fahrkomforts bei einem mit einem Fahrerassistenzsystem ausgestatteten Fahrzeug und dadurch eine gesteigerte Akzeptanz für ein solches System bei dem Fahrer. Dadurch, dass systembedingte Grenzwerte, die die Aktivierung bzw. Deaktivierung einer Sicherheitsfunktion des Fahrerassistenzsystems bestimmen, variabel ausgestaltet sind, entsprechen sie eher der subjektiven Fahrerwahrnehmung, so dass die Systemreaktion, das heißt die Deaktivierung bei dem Überschreiten der Systemgrenze, für den Fahrer besser nachvollziehbar ist.

Besonders vorteilhaft werden für die Aktivierung bzw. Deaktivierung der LKS-Funktion Grenzwerte vorgegeben, derart, dass die LKS-Funktion innerhalb der Grenzwerte aktiviert und außerhalb dieser Grenzwerte deaktiviert wird, wobei die genannten Grenzwerte während der Fahrt des Fahrzeugs kontinuierlich überwacht werden. Besonders vorteilhaft sind die Grenzwerte von leicht messbaren Betriebskenngrößen des Fahrzeugs abhängig. So kann vorteilhaft der LKS-Funktion als Sicherheitsfunktion, die den Fahrer bei der Einhaltung der Fahrspur unterstützt, die Querbeschleunigung des Fahrzeugs als systembedingter Grenzwert zugeordnet sein, wobei die Querbeschleunigung wiederum von der Geschwindigkeit des Fahrzeugs abhängig ist.

Weitere Vorteile ergeben sich aus den Unteransprüchen, der Beschreibung und der Zeichnung.

Kurze Beschreibung der Zeichnungen

Ausführungsformen der Erfindung werden nachfolgend unter Bezug auf die Zeichnung näher erläutert. Dabei zeigt:

Figur 1      ein Blockdiagramm eines Fahrerassistenzsystems mit LKS-Funktion;

Figur 2      ein Diagramm mit Darstellung der Systemgrenze der Querbeschleunigung der LKS-Funktion als Funktion der Geschwindigkeit;

Figur 3      ein Diagramm mit Darstellung der Systemgrenze der Krümmung als Funktion der Geschwindigkeit.

Ausführungsformen der Erfindung

Ausführungsformen der Erfindung werden im Folgenden unter Bezug auf die Zeichnung näher erläutert. Die Erfindung geht dabei von der Erkenntnis aus, dass die Akzeptanz eines Fahrerassistenzsystems und der von diesem bereitgestellten Assistenzfunktionen wesentlich verbessert werden kann, wenn sich die in dem Fahrerassistenzsystem vorgesehenen Systemgrenzen stärker an dem subjektiven Sicherheits- und Komfortempfinden des Fahrers orientieren. Die Systemgrenzen werden dann für den Fahrer nachvollziehbar, da sie sich mit seiner eigenen Wahrnehmung decken.

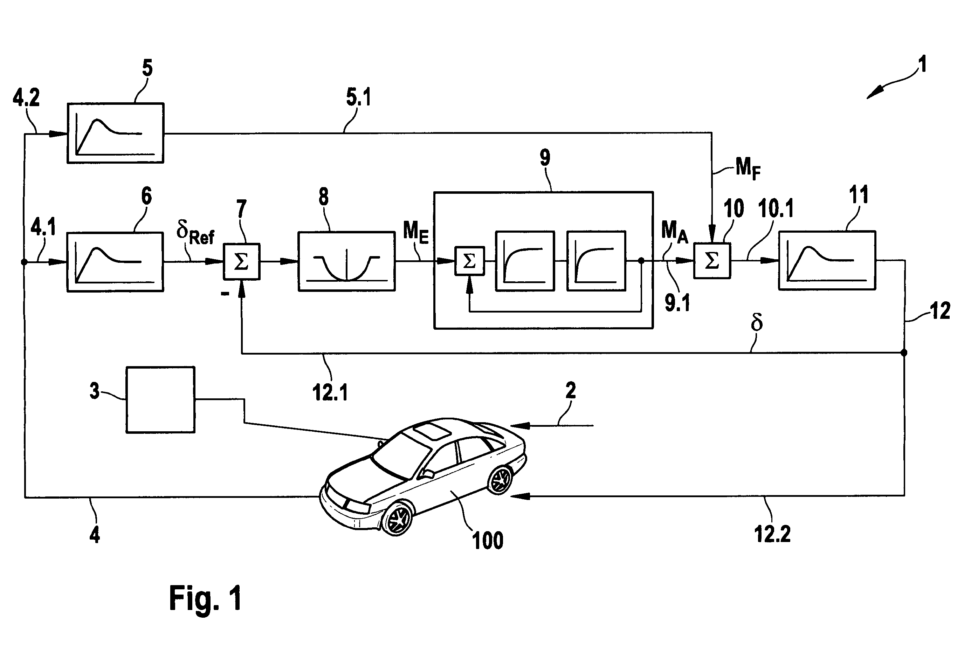

Figur 1 zeigt ein Blockdiagramm einer Fahrerassistenzvorrichtung 1 mit LKS Funktion, das in einem Fahrzeug 100 angeordnet ist. Über entsprechende Sensoren werden die Ablage des Fahrzeugs, der Differenzwinkel, die Krümmung der Fahrspur erfasst und über die Pfade 4, 4.1 einem Funktionsmodul des Fahrerassistenzsystems 1 zugeleitet, das ein Referenzmodell 6 für die Querführung des Fahrzeugs 100 umfasst. Mit Hilfe des Referenzmodells 6 wird aus den genannten Eingangsgrößen ein Referenzwinkel $\delta_{Ref}$ gebildet. Dieser Referenzwinkel wird einem ersten Eingang eines weiteren Funktionsmoduls (Summationsknoten 7) zugeführt, dessen Ausgang mit einem weiteren Funktionsmodul verbunden ist. Dieses Funktionsmodul umfasst eine Führungskennlinie 8 für die LKS-Funktion des Fahrerassistenzsystems 1. Das die Führungskennlinie 8 umfassende Funktionsmodul ist mit einem Lenksteller 9 mit Momentenregelkreis verbunden. Der Lenksteller 9 ist mit einem ersten Eingang eines weiteren Funktionsmoduls (Summationsknoten 10) verbunden. Der Pfad 9.1 repräsentiert den Lenkeingriff des LKS-Systems. Gleichzeitig nimmt der Fahrer 5 die Fahrzeugposition in der Spur wahr (Pfad 4.2) und steuert das Fahrzeug am Lenkrad (Fahrerlenkeingriff 5.1). Fahrerwunsch und Systemeingriff wirken zusammen über den Summationsknoten 10 auf das Lenksystem 11 (Pfad 10.1) und steuern über die Pfade 12, 12.2 und die Beeinflussung des Lenkwinkels die Querbewegung des Fahrzeugs 100. Über den Pfad 12.1 erfolgt eine Rückwirkung zu dem Summationsknoten 7. Über den schematisch angedeuteten Pfad 2 wirken Störungen auf das Fahrzeug 100 ein.

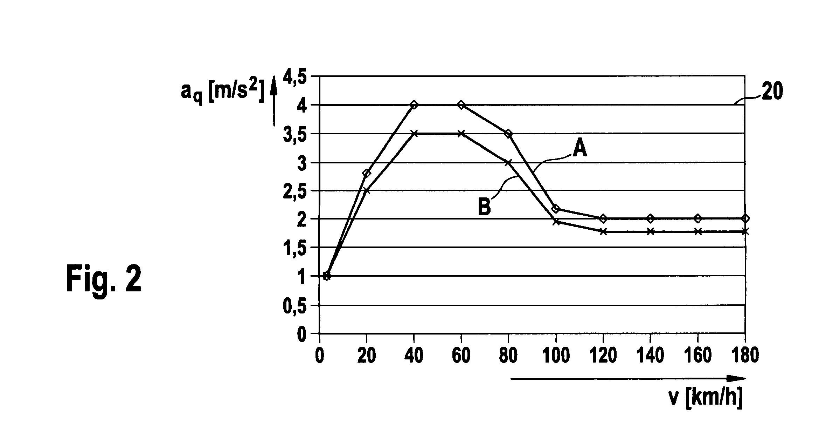

Zur Modellierung der Fahrzeugquerdynamik wird bei der Realisierung einer LKS-Funktion eines Fahrerassistenzsystems häufig das so genannte Einspurmodell verwendet. Aus der eingeschränkten Gültigkeit dieses Modells bis etwa zu einer maximalen Querbeschleunigung $a_q$ von $4 m/s^2$ kann für die LKS-Funktion eines Fahrerassistenzsystems eine starre, über die Geschwindigkeit unveränderliche Systemgrenze in der Querbeschleunigung des Fahrzeugs abgeleitet werden. Es hat sich jedoch herausgestellt, dass die Querbeschleunigung, bei der ein Fahrer eine Kurvenfahrt subjektiv gesehen, noch als komfortabel und sicher empfindet, stark von der Geschwindigkeit des Fahrzeugs abhängig ist. Hinzu kommt, dass dieser Sinneseindruck von Fahrer zu Fahrer unterschiedlich sein kann, da es auf das subjektive Empfinden ankommt. Die praktische Realisierung einer über den gesamten Geschwindigkeitsbereich starren Systemgrenze für die Querbeschleunigung, wie sie durch das Einspurmodell technisch motiviert wäre, entspräche also in der Regel nicht dem Sicherheits- und Komfortempfinden eines Fahrers. Um dieser Erkenntnis Rechnung zu tragen, sieht die Erfindung eine geschwindigkeitsabhängige Anpassung der Querbeschleunigung als Systemgrenze vor. Dies wird im Folgenden unter Bezug auf Figur 2 näher erläutert. Das in Figur 2 dargestellte Diagramm zeigt die Querbeschleunigung als Funktion der Geschwindigkeit. Mit Bezugsziffer 20 ist der Gültigkeitsbereich des Einspurmodells bezeichnet. Dieser reicht unabhängig von der Geschwindigkeit auf der Querbeschleunigungsachse bis etwa 4 m/s². In den Kurven A und B sind einzelne Messpunkte dargestellt, die durch eine Linie miteinander verbunden sind. Diese Linie repräsentiert also die erfindungsgemäß ausgeführte Systemgrenze einer LKS-Funktion bezüglich der Querbeschleunigung. Unterhalb der Systemgrenze ist die LKS-Funktion aktiviert. Bei Überschreiten dieser Systemgrenze würde die LKS-Funktion deaktiviert. Der Fahrer müsste dann in diesem Fall die Querführung des Fahrzeugs wieder eigenständig, das heißt ohne Unterstützung seitens des Fahrerassistenzsystems, übernehmen. Aus dem in Figur 2 dargestellten Diagramm (Kurve A) ist ersichtlich, dass die der Querbeschleunigung zugeordnete Systemgrenze bei aktivierter LKS-Funktion zunächst mit steigender Geschwindigkeit in einem ersten Geschwindigkeitsbereich ansteigt, bis sie etwa in einem zweiten Geschwindigkeitsbereich, der zwischen etwa 60 km/h und etwa 80 km/h liegt, mit etwa 4 m/s² einen systembedingten Maximalwert erreicht. Der an dem Komfort des Fahrers orientierte Bereich der Querbeschleunigung ist also eine Teilmenge des Gültigkeitsbereichs des Einspurmodells und damit kompatibel mit der technisch begründeten Systemgrenze in der Querbeschleunigung des Fahrzeugs von etwa 4 m/s². In einem dritten Geschwindigkeitsbereich, der zwischen etwa 60 km/h und etwa 120 km/h liegt, nimmt die Querbeschleunigung mit steigender Geschwindigkeit wieder ab. In einem vierten Geschwindigkeitsbereich schließlich, der zwischen etwa 120 km/h und der Höchstgeschwindigkeit des Fahrzeugs liegt, hat die Querbeschleunigung einen konstanten Wert, der unterhalb des systembedingten maximalen Werts liegt. Die vorstehende Darstellung ist nur beispielhaft. Es liegt im Rahmen der Erfindung, die möglichen Geschwindigkeitsbereiche im Rahmen alternativer Ausführungsvarianten noch weiter zu differenzieren, also beispielsweise mehr als vier Geschwindigkeitsbereiche oder auch weniger als vier Geschwindigkeitsbereiche vorzusehen.

In einer weiteren vorteilhaften Ausführungsvariante wird der funktionale Zusammenhang zwischen der Geschwindigkeit v und der Systemgrenze der Querbeschleunigung $a_q$ durch folgende Beziehung beschrieben:

$$(1) \qquad a_q = k_1 v e^{-k_2 \left(\frac{v}{v_{ref}}\right)},$$

mit $k_1$, $k_2$, $v_{ref}$ als Parameter.

In einer besonders vorteilhaften Ausführungsvariante der Erfindung kann der Verlauf des in Figur 2 dargestellten Graphs (Kurve A, Kurve B) auch noch fahrerindividuell verändert werden. Beispielsweise kann für einen ersten Fahrer ein Kurvenverlauf gemäß Kurve A und für einen zweiten Fahrer ein Kurvenverlauf gemäß Kurve B eingestellt werden. Diese Einstellung kann, in einer ersten Ausführungsvariante der Erfindung, vorteilhaft manuell erfolgen, indem der Fahrer beispielsweise ein dafür vorgesehenes Schaltmittel betätigt. Besonders vorteilhaft kann diese fahrerindividuelle Anpassung auch automatisch erfolgen, indem das Fahrerassistenzsystem beispielsweise, anhand der Betätigung des Fahrpedals, die von dem jeweiligen Fahrer bevorzugte Fahrcharakteristik des Fahrzeugs erfasst und die Grenzwerte der Assistenzfunktionen entsprechend wählt.

Ähnlich wie mit der zuvor beschriebenen Systemgrenze bezüglich der Querbeschleunigung, verhält es sich mit der Spurkrümmung k. Diese ist im Wesentlichen durch den eingeschränkten horizontalen Erfassungsbereich eines in dem Fahrerassistenzsystem vorgesehenen Videosensors technisch bedingt. Beispielsweise können bei einem horizontalen Öffnungswinkel des Videosensors von etwa 35° Spurkrümmungen bis maximal $\kappa_{max} = 0{,}007$ 1/m noch zuverlässig von der Videosensorik erfasst werden. Andererseits lässt sich die sicherheits- und komfortorientierte Systemgrenze für die Querbeschleunigung mit der Beziehung

$$(2) \qquad a_q = v^2 \kappa$$

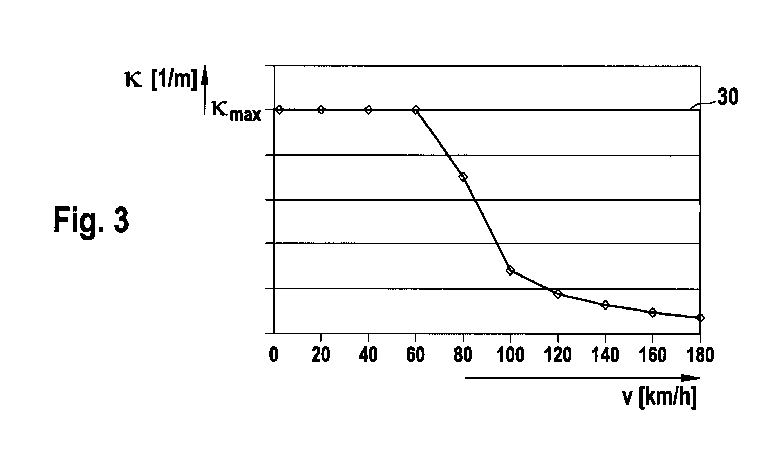

auch direkt auf die Spurkrümmung übertragen, so dass sich aus der komfortorientierten Systemgrenze für die Querbeschleunigung direkt die in Figur 3 dargestellte Systemgrenze für die Spurkrümmung ableiten lässt. In einem ersten Geschwindigkeitsbereich, der bis etwa einschließlich 60 km/h reicht, ist die Lage der Systemgrenze in der Spurkrümmung aufgrund des eingeschränkten Erfassungsbereichs des Videosensors auf einen konstanten Wert $\kappa_{maz}$ beschränkt. In einem daran anschließenden Geschwindigkeitsbereich, der bis zur Höchstgeschwindigkeit des Fahrzeugs reicht, fällt dann die Systemgrenze gemäß dem Zusammenhang mit der komfortorientierten Querbeschleunigung monoton ab. Mit Bezugsziffer 30 ist der Erfassungsbereich des Videosensors bezeichnet. Er ist unabhängig von der Geschwindigkeit.

Besonders vorteilhaft sind die Kennlinien, wie in Figur 2 und 3 dargestellt, in Form von Stützstellen als Kennfeld 3 in einer Speichereinrichtung des Fahrerassistenzsystems 1 hinterlegt. Bei einer bestimmten Geschwindigkeit wird dann linear zwischen den nächstgelegenen Stützstellen interpoliert, um die der bestimmten Geschwindigkeit zugeordnete Systemgrenze zu ermitteln.

**Patentansprüche**

1. Fahrerassistenzvorrichtung (1) für ein Fahrzeug (100) mit einer Sicherheitsfunktion,
bei dem für die Sicherheitsfunktion systembedingte Grenzwerte vorgesehen sind, bei deren Unterschreiten die Sicherheitsfunktion aktiviert und bei deren Überschreiten die Sicherheitsfunktion deaktiviert ist, wobei die Grenzwerte variabel ausgebildet sind, **dadurch gekennzeichnet, dass** die Sicherheitsfunktion eine LKS-Funktion (LKS = Lane Keeping Support) ist, dass die Querbeschleunigung ein systembedingter Grenzwert der LKS-Funktion ist und dass dieser Grenzwert von der Geschwindigkeit des Fahrzeugs abhängig ist.

2. Fahrerassistenzvorrichtung nach Anspruch 1, **dadurch gekennzeichnet, dass** die Grenzwerte von Betriebskenngrößen des Fahrzeugs (100) abhängig sind.

3. Fahrerassistenzvorrichtung nach einem der vorhergehenden Ansprüche, **dadurch gekennzeichnet, dass** der Grenzwert der Querbeschleunigung von der Funktion $a_q = k_1 v e^{-k_2\left(\frac{v}{v_{ref}}\right)}$, beschrieben wird.

4. Fahrerassistenzvorrichtung nach einem der vorhergehenden Ansprüche, **dadurch gekennzeichnet, dass** in einem ersten Geschwindigkeitsbereich der Grenzwert der Querbeschleunigung mit steigender Geschwindigkeit ansteigt.

5. Fahrerassistenzvorrichtung nach einem der vorhergehenden Ansprüche, **dadurch gekennzeichnet, dass** der erste Geschwindigkeitsbereich zwischen etwa 5 km/h und etwa 40 km/h liegt.

6. Fahrerassistenzvorrichtung nach einem der vorhergehenden Ansprüche, **dadurch gekennzeichnet, dass** in einem zweiten Geschwindigkeitsbereich der Grenzwert der Querbeschleunigung mit steigender Geschwindigkeit im Wesentlichen konstant ist und den systembedingten Maximalwert aufweist.

7. Fahrerassistenzvorrichtung nach einem der vorhergehenden Ansprüche, **dadurch gekennzeichnet, dass** der zweite Geschwindigkeitsbereich zwischen etwa 40 km/h und etwa 60 km/h liegt.

8. Fahrerassistenzvorrichtung nach einem der vorhergehenden Ansprüche, **dadurch gekennzeichnet, dass** in einem dritten Geschwindigkeitsbereich der Grenzwert der Querbeschleunigung mit steigender Geschwindigkeit abnimmt.

9. Fahrerassistenzvorrichtung nach einem der vorhergehenden Ansprüche, **dadurch gekennzeichnet, dass** der dritte Geschwindigkeitsbereich zwischen etwa 60 km/h und etwa 120 km/h liegt.

10. Fahrerassistenzvorrichtung nach einem der vorhergehenden Ansprüche, **dadurch gekennzeichnet, dass** in einem vierten Geschwindigkeitsbereich der Grenzwert der Querbeschleunigung mit steigender Geschwindigkeit im Wesentlichen konstant ist und unter dem systembedingten Maximalwert liegt.

11. Fahrerassistenzvorrichtung nach einem der vorhergehenden Ansprüche, **dadurch gekennzeichnet, dass** der vierte Geschwindigkeitsbereich zwischen etwa 120 km/h und der Höchstgeschwindigkeit des Fahrzeugs liegt.

12. Fahrerassistenzvorrichtung nach einem der vorhergehenden Ansprüche, **dadurch gekennzeichnet, dass** der Verlauf der Grenzwerte fahrerindividuell anpassbar ist.

13. Fahrerassistenzvorrichtung nach einem der vorhergehenden Ansprüche, **dadurch gekennzeichnet, dass** die Systemgrenzen als Stützstellen in einem Kennfeld gespeichert sind.

14. Verfahren für die Steuerung einer eine Sicherheitsfunktion, nämlich eine LKS Funktion (LKS = Lane Keeping Support) umfassenden Fahrerassistenzvorrichtung, wobei eine einer Sicherheitsfunktion der Fahrerassistenzvorrichtung zugeordnete Betriebskenngröße des Fahrzeugs erfasst wird, dass die der erfassten Betriebskenngröße zugeordnete Systemgrenze bestimmt wird, dass bei Unterschreiten der Systemgrenze die Sicherheitsfunktion aktiviert und dass bei Überschreiten der Systemgrenze die Sicherheitsfunktion deaktiviert wird, **dadurch gekennzeichnet, dass** die Geschwindigkeit des Fahrzeugs erfasst wird, dass die Querbeschleunigung des Fahrzeugs erfasst wird, dass geprüft wird, ob die Querbeschleunigung unterhalb oder oberhalb eines als Systemgrenze gespeicherten Werts der Querbeschleunigung liegt, und dass die Sicherheitsfunktion deaktiviert wird, wenn die Querbeschleunigung oberhalb des Systemgrenzwerts liegt.

## Claims

1. Driver assistance device (1) for a vehicle (100) having a safety function, in which system-related limiting values at whose downward transgression the safety function is activated and at whose upward transgression the safety function is deactivated are provided for the safety function, wherein the limiting values are embodied in a variable fashion, **characterized in that** the safety function is an LKS (Lane Keeping Support) function, **in that** the lateral acceleration is a system-related limiting value of the LKS function, and **in that** this limiting value is dependent on the speed of the vehicle.

2. Driver assistance device according to Claim 1, **characterized in that** the limiting values are dependent on operational characteristic variables of the vehicle (100).

3. Driver assistance device according to one of the preceding claims, **characterized in that** the limiting value of the transverse acceleration is described by the function $a_q = k_1 v e^{-k_2\left(\frac{v}{v_r}\right)}$ .

4. Driver assistance device according to one of the preceding claims, **characterized in that** in a first speed range the limiting value of the transverse acceleration increases as the speed increases.

5. Driver assistance device according to one of the preceding claims, **characterized in that** the first speed range is between approximately 5 km/h and approximately 40 km/h.

6. Driver assistance device according to one of the preceding claims, **characterized in that** in a second speed range the limiting value of the transverse acceleration is essentially constant as the speed increases and has the system-related maximum value.

7. Driver assistance device according to one of the preceding claims, **characterized in that** the second speed range is between approximately 40 km/h and approximately 60 km/h.

8. Driver assistance device according to one of the preceding claims, **characterized in that** in a third speed range the limiting value of the transverse acceleration decreases as the speed increases.

9. Driver assistance device according to one of the preceding claims, **characterized in that** the third speed range is between approximately 60 km/h and approximately 120 km/h.

10. Driver assistance device according to one of the preceding claims, **characterized in that** in a fourth speed range the limiting value of the transverse acceleration is essentially constant as the speed increases and is below the system-induced maximum value.

11. Driver assistance device according to one of the preceding claims, **characterized in that** the fourth speed range is between approximately 120 km/h and the maximum speed of the vehicle.

12. Driver assistance device according to one of the preceding claims, **characterized in that** the profile of the limiting values can be adapted in a driver-specific fashion.

13. Driver assistance device according to one of the preceding claims, **characterized in that** the system limits are stored as reference points in a characteristic diagram.

14. Method for controlling a driver assistance device which comprises a safety function, specifically an LKS (Lane Keeping Support) function, wherein an operational characteristic variable of the vehicle which is assigned to a safety function of the driver assistance device is detected, wherein the system limit which is assigned to the detected operational characteristic variable is determined, wherein at the downward transgression of the system limit the safety function is activated, and wherein at the upward transgression of the system limit the safety function is deactivated, **characterized in that** the speed of the vehicle is detected, **in that** the transverse acceleration of the vehicle is detected, **in that** it is checked whether the transverse acceleration is below or above a value of the transverse acceleration stored as a system limit, and **in that** the safety function is deactivated if the transverse acceleration is above the system limiting value.

## Revendications

1. Ensemble (1) d'assistance au conducteur d'un véhicule (100), doté d'une fonction de sécurité, des valeurs limites systémiques étant prévues pour la fonction de sécurité, la fonction de sécurité étant activée lorsque ces valeurs ne sont pas atteintes et la fonction de sécurité étant désactivée lorsqu'elles sont dépassées, les valeurs limites pouvant être modifiées, **caractérisé en ce que**
la fonction de sécurité est une fonction LKS (LKS = "Lane Keeping Support" - assistance au maintien sur la bande de circulation),
**en ce que** l'accélération transversale est une valeur limite systémique de la fonction LKS et

**en ce que** cette valeur limite dépend de la vitesse du véhicule.

2. Ensemble s'assistance au conducteur selon la revendication 1, **caractérisé en ce que** les valeurs limites dépendent de grandeurs caractéristiques du fonctionnement du véhicule (100).

3. Ensemble s'assistance au conducteur selon l'une des revendications précédentes, **caractérisé en ce que** la valeur limite de l'accélération transversale est décrite par la fonction $a_q = k_1 v e^{-k_2\left(\frac{v}{v_m}\right)}$

4. Ensemble s'assistance au conducteur selon l'une des revendications précédentes, **caractérisé en ce que** dans une première plage de vitesse, la valeur limite de l'accélération transversale augmente lorsque la vitesse augmente.

5. Ensemble s'assistance au conducteur selon l'une des revendications précédentes, **caractérisé en ce que** la première plage de vitesse est comprise entre environ 5 km/h et environ 40 km/h.

6. Ensemble s'assistance au conducteur selon l'une des revendications précédentes, **caractérisé en ce que** dans une deuxième plage de vitesse, la valeur limite de l'accélération transversale est essentiellement constante lorsque la vitesse augmente et présente la valeur maximale systémique.

7. Ensemble s'assistance au conducteur selon l'une des revendications précédentes, **caractérisé en ce que** la deuxième plage de vitesse est comprise entre environ 40 km/h et environ 60 km/h.

8. Ensemble s'assistance au conducteur selon l'une des revendications précédentes, **caractérisé en ce que** dans une troisième plage de vitesse, la valeur limite de l'accélération transversale diminue lorsque la vitesse augmente.

9. Ensemble s'assistance au conducteur selon l'une des revendications précédentes, **caractérisé en ce que** la troisième plage de vitesse est située entre environ 60 km/h et environ 120 km/h.

10. Ensemble s'assistance au conducteur selon l'une des revendications précédentes, **caractérisé en ce que** dans une quatrième plage de vitesse, la valeur limite de l'accélération transversale est essentiellement constante lorsque la vitesse augmente et est située en dessous de la valeur maximale systémique.

11. Ensemble s'assistance au conducteur selon l'une des revendications précédentes, **caractérisé en ce que** la quatrième plage de vitesse est comprise entre environ 120 km/h et la vitesse maximale du véhicule.

12. Ensemble s'assistance au conducteur selon l'une des revendications précédentes, **caractérisé en ce que** l'évolution des valeurs limites peut être adaptée de manière spécifique à chaque conducteur.

13. Ensemble s'assistance au conducteur selon l'une des revendications précédentes, **caractérisé en ce que** les limites du système sont conservées en mémoire dans un champ de caractéristiques en tant qu'emplacement de référence.

14. Procédé pour la commande d'un ensemble d'assistance au conducteur comprenant une fonction de sécurité, à savoir une fonction LKS (LKS = "Lane Keeping Support" - assistance au maintien sur la bande de circulation), dans lequel une grandeur caractéristique de fonctionnement du véhicule associée à une fonction de sécurité de l'ensemble d'assistance au conducteur est saisie, dans lequel les limites systémiques associées à la grandeur caractéristique de fonctionnement saisies sont déterminées, dans lequel la fonction de sécurité est activée lorsque les limites systémiques ne sont pas atteintes et dans lequel la fonction de sécurité est désactivée lorsque les fonctions systémiques sont dépassées, **caractérisé en ce que** la vitesse du véhicule est saisie, **en ce que** l'accélération transversale du véhicule est saisie, **en ce qu'**il est vérifié si l'accélération transversale est située en dessous ou au-dessus d'une valeur de l'accélération transversale conservée en mémoire comme limite systémique et **en ce que** la fonction de sécurité est désactivée lorsque l'accélération transversale est située au-dessus de la valeur limite systémique.

Fig. 1

EP 2 155 534 B1

**Fig. 2**

EP 2 155 534 B1

**Fig. 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137292 A1
- EP 1531113 A2
- EP 1621449 A2
- DE 102007007442 A1
- EP 1783719 A2
- EP 1977946 A1
- WO 2007051671 A1